# EUROPEAN PATENT APPLICATION

(11) **EP 1 249 975 A2**
(43) Date of publication of application: **16.10.2002**
(21) Application number: 02006552.0
(22) Date of filing: 20.03.2002
(51) Int. Cl.: H04L 12/56, H04L 29/06

(54) **Communication quality control scheme using real time packet transmission state and transmission path congestion state**

(30) Priority: 21.03.2001 JP 2001081321
(71) Applicant: NTT DoCoMo, Inc., Tokyo 100-6150 (JP)
(72) Inventor: Yoshimura, Takeshi, Yokohama-shi, Kanagawa-ken (JP); Kawahara, Toshiro, Tsuyama-shi, Okayama-ken (JP); Ohya, Tomoyuki, Yokosuka-shi, Kanagawa-ken (JP); Etoh, Minoru, Yokohama-shi, Kanagawa-ken (JP)
(74) Representative: HOFFMANN - EITLE

(57) **Abstract**

A congestion state of a transmission path between a transmitting terminal device and a receiving terminal device is analyzed, a transmission state of media packets between the transmitting terminal device and the receiving terminal device is analyzed, and qualities of the media packets to be transmitted by the transmitting terminal device is controlled according to the transmission path congestion state analysis result and the transmission state analysis result.

## Description

### BACKGROUND OF THE INVENTION

### FIELD OF THE INVENTION

The present invention relates to a communication control scheme for controlling qualities of RT (Real Time) packets to be transmitted from a transmitting terminal device to a receiving terminal device.

### DESCRIPTION OF THE RELATED ART

In the case of providing a service such as the so called Internet telephone, video conference or music/video distribution through a network (IP network) using the IP (Internet Protocol) such as the Internet, the real time transmission of packets is demanded.

In view of such demands, RFC (Request For Comments) 1889 of the IETF (Internet Engineering Task Force) specifies the RTP (Real-time Transport Protocol) for transporting packets in real time on the IP network. In this RTP, a protocol using a sequence number, a timestamp, etc., is specified.

In the case of transmitting data such as audio data or video data by this RTP, severe conditions regarding throughput, delay, packet loss, etc., will be imposed in order to maintain the QoS (Quality of Service). However, the IP network such as the Internent is basically the best effort type network so that it is difficult to satisfy these conditions completely.

For this reason, in addition to the above described RTP, the RFC 1889 also specifies the RTCP (RTP Control Protocol) for controlling and monitoring the RTP sessions so as to control the transmission rate, the packet delay, the packet loss, etc., in accordance with the congestion state of the network, etc.

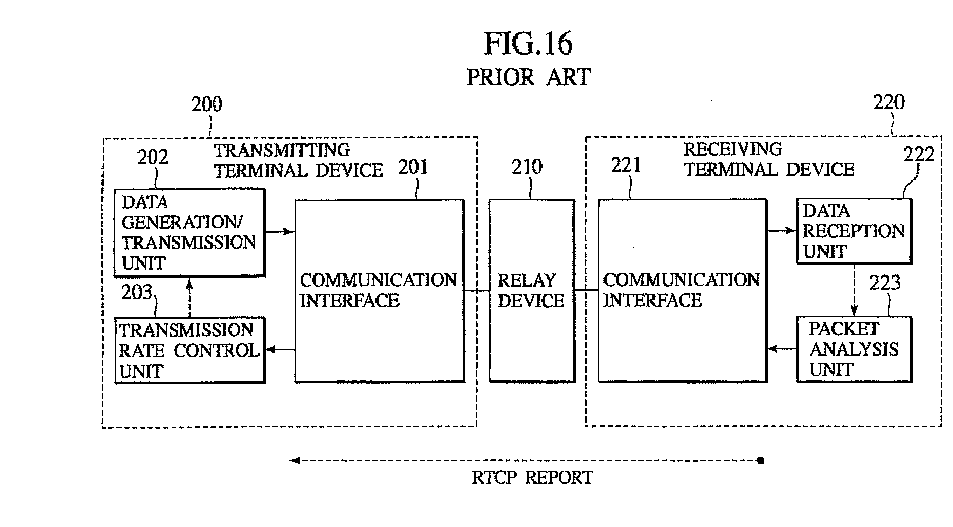

In this RTCP, as shown in Fig. 16, a feedback of information such as the number of lost packets, the packet loss rate, the delay jitter, etc., regarding the received RTP packets is provided from a receiving terminal device 220 to a transmitting terminal device 200 as an RTCP report. The transmitting terminal device 200 comprehends the congestion state of the network from the information contained in the RTCP report, and carries out a control of the transmission rate or the like according to this congestion state.

In the communication control methods disclosed in Japanese Patent Application Laid Open Nos. 2000-183958 (2000), 11-284659 (1999), and 11-341064 (1999), for example, the transmitting terminal device comprehends the congestion state of the network by using the packet loss information, the delay information, etc. contained in the RTCP report from the receiving terminal device, and determines the transmission rate according to this congestion state.

Now, in the case involving a transmission path with a poor transmission state such as a radio channel between the transmitting terminal device and the receiving terminal device, the delay or the delay jitter due to the packet loss and the packet re-transmission in that link can be caused by an error on the transmission path.

However, in the above described RTCP, only the receiving terminal device transmits the RTCP report, and no consideration is given to a notification of the delay, the delay jitter or the like due to the transmission state of the transmission path. For this reason, when the delay, the delay jitter or the like due to the packet loss and the re-transmission is caused by the transmission state of the transmission path, there can be a case where the transmitting terminal device erroneously recognizes it as the packet loss, the delay, the delay jitter, etc., due to the congestion of the network, and causes the unnecessary lowering of the quality by reducing the transmission rate or the like unnecessarily.

### BRIEF SUMMARY OF THE INVENTION

It is therefore an object of the present invention to provide a communication quality control scheme capable of appropriately controlling qualities of packets to be transmitted even in the case involving a transmission path with a poor transmission state between the transmitting terminal device and the receiving terminal device.

According to one aspect of the present invention there is provided a communication quality control method for controlling a transmission rate of real time packets to be transmitted from a transmitting terminal device to a receiving terminal device, comprising the steps of: analyzing a congestion state of a transmission path according to a transmission state of the real time packets received by a relay device for relaying the real time packets from the transmitting terminal device; and controlling the transmission rate of the real time packets to be transmitted by the transmitting terminal device according to the congestion state analysed by the analyzing step.

According to another aspect of the present invention there is provided a communication quality control method for controlling qualities of real time packets to be transmitted from a transmitting terminal device to a receiving terminal device, comprising the steps of: (a) analyzing a congestion state of a transmission path between the transmitting terminal device and the receiving terminal device; (b) analyzing a transmission state of the real time packets received by a relay device for relaying the real time packets between the transmitting terminal device and the receiving terminal device; and (c) controlling the qualities of the real time packets to be transmitted by the transmitting terminal device according to the congestion state analyzed by the step (a) and the transmission state analyzed by the step (b).

According to another aspect of the present invention there is provided a method for operating a packet analysis device, comprising the steps of: analyzing a transmission state of real time packets received by a relay device for relaying communications between a transmitting terminal device for transmitting the real time packets and a receiving terminal device for receiving the real time packets from the transmitting terminal device; and transmitting a report of the transmission state analyzed by the analyzing step, to the transmitting terminal device which controls qualities of the real time packets to be transmitted according to the report.

According to another aspect of the present invention there is provided a method for operating a transmitting terminal device, comprising the steps of: transmitting real time packets from the transmitting terminal device; acquiring a relayed packet analysis report of a transmission state of the real time packets received by a relay device for relaying the real time packets from the transmitting terminal device, and a received packet analysis report of a transmission state of the real time packets received by a receiving terminal device; and controlling qualities of the real time packets to be transmitted by the transmitting step according to the relayed packet analysis report and the received packet analysis report acquired by the acquiring step.

According to another aspect of the present invention there is provided a communication quality control system for controlling a transmission rate of real time packets to be transmitted from a transmitting terminal device to a receiving terminal device, comprising: an analysis unit for analyzing a congestion state of a transmission path according to a transmission State of the real time packets received by a relay device for relaying the real time packets from the transmitting terminal device; and a control unit for controlling the transmission rate of the real time packets to be transmitted by the transmitting terminal device according to the congestion state analyzed by the analysis unit.

According to another aspect of the present invention there is provided a communication quality control system for controlling qualities of real time packets to be transmitted from a transmitting terminal device to a receiving terminal device, comprising: a congestion state analysis unit for analyzing a congestion state of a transmission path between the transmitting terminal device and the receiving terminal device; a transmission state analysis unit for analyzing a transmission state of the real time packets received by a relay device for relaying the real time packets between the transmitting terminal device and the receiving terminal device; and a control unit for controlling the qualities of the real time packets to be transmitted by the transmitting terminal device according to the congestion state analyzed by the congestion state analysis unit and the transmission state analyzed by the transmission state analysis unit.

According to another aspect of the present invention there is provided a packet analysis device, comprising: an analysis unit for analyzing a transmission state of real time packets received by a relay device for relaying communications between a transmitting terminal device for transmitting the real time packets and a receiving terminal device for receiving the real time packets from the transmitting terminal device; and a report transmission unit for transmitting a report of the transmission state analyzed by the analysis unit, to the transmitting terminal device which controls qualities of the real time packets to be transmitted according to the report.

According to another aspect of the present invention there is provided a transmitting terminal device, comprising: a real time packet transmission unit for transmitting real time packets: an analysis report acquisition unit for acquiring a relayed packet analysis report of a transmission state of the real time packets received by a relay device for relaying the real time packets from the transmitting terminal device, and a received packet analysis report of a transmission state of the real time packets received by a receiving terminal device; and a control unit for controlling qualities of the real time packets to be transmitted by the real time packet transmission unit according to the relayed packet analysis report and the received packet analysis report acquired by the analysis report acquisition unit.

Other features and advantages of the present invention will become apparent from the following description taken in conjunction with the accompanying drawings.

### BRIEF DESCRIPTION OF THE DRAWINGS

Fig. 1 is a block diagram showing an exemplary configuration of a communication system according to one embodiment of the present invention.

Fig. 2 is a diagram showing a format for a header of an RTP packet which is a unit of data packet transmission in the communication system of Fig. 1.

Fig. 3 is a flow chart for a control of a transmission rate according to a congestion state of a transmission path in the communication system of Fig. 1.

Fig. 4 is a diagram showing a flow of data and a flow of report in the communication system of Fig. 1.

Fig. 5 is a diagram showing one exemplary table that can be used in a control of an error tolerance of data packets in the communication system of Fig. 1.

Fig. 6 is a diagram showing another exemplary table that can be used in a control of an error tolerance of data packets in the communication system of Fig. 1.

Fig. 7 is a diagram showing a format for a FEC packet that can be used in a control of an error tolerance of data packets in the communication system of Fig. 1.

Fig. 8 is a block diagram showing another exemplary configuration of a packet analysis device in the communication system of Fig. 1.

Fig. 9 is a schematic block diagram showing another exemplary configuration of a communication system according to one embodiment of the present invention.

Fig. 10 is a schematic block diagram showing another exemplary configuration of a communication system according to one embodiment of the present invention.

Fig. 11 is a schematic block diagram showing another exemplary configuration of a communication system according to one embodiment of the present invention.

Fig. 12 is a flow chart for a control of a transmission rate according to a congestion state of a transmission path in the communication system of Fig. 11.

Fig. 13 is a schematic block diagram showing another exemplary configuration of a communication system according to one embodiment of the present invention.

Fig. 14 is a schematic block diagram showing an exemplary configuration of a transmitting terminal device in the communication system of Fig. 13.

Fig. 15 is a flow chart for a control of a transmission rate according to a congestion state of a transmission path in the communication system of Fig. 11.

Fig. 16 is a block diagram showing an exemplary configuration of a conventional communication system.

### DETAILED DESCRIPTION OF THE INVENTION

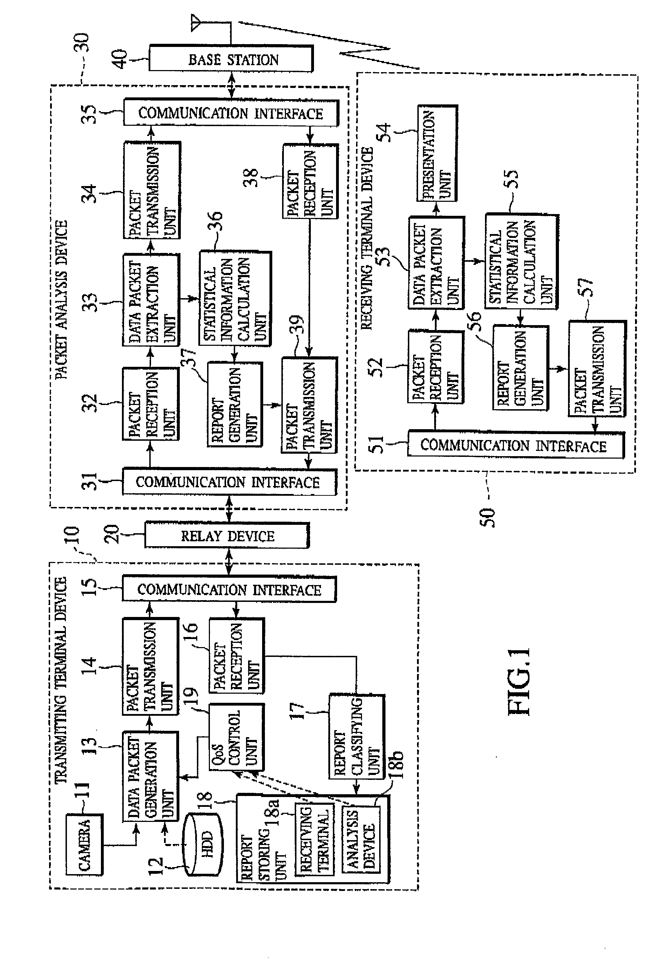

Referring now to Fig. 1 to Fig. 15, one embodiment of a communication quality control scheme according to the present invention will be described in detail.

Fig. 1 shows a configuration of a communication system according to this embodiment.

This communication system comprises a transmitting terminal device 10 for transmitting data packets (RT packets) for audio data or video data, for example, in real time, a relay device 20 connected with the transmitting terminal device 10 through a wired channel (transmission path), for example, for relaying the data packets from the transmitting terminal device 10, a packet analysis device 30 for analyzing a transmission state of the data packets from the transmitting terminal device 10, a base station 40 for relaying the data packets from the transmitting terminal device 10 through a radio channel (transmission path), and a receiving terminal device 50 for receiving the data packets from the transmitting terminal device 10 that are supplied through the base station 40. Note that, in Fig. 1, only one relay device 20 is shown for the sake of simplicity but it is also possible to use a plurality of relay devices.

In the following, the exemplary case of using an RTCP report as information for indicating the transmission state of the data packets, but the information for indicating the transmission state of the data packets is not limited to this particular form, and it is possible to use a message or the like in the other format as long as it contains information for indicating the transmission state such as a packet loss rate, a delay jitter, etc.

The transmitting terminal device 10 is an information processing device such as PC (Personal Computer) equipped with CPU, memory, etc., for example.

This transmitting terminal device 10 has a data packet generation unit 13 for generating data packets for video signal data from a camera 11, for example, or video data, audio data, etc., that are stored in a hard disk drive (HDD) device 12, a packet transmission unit 14 for transmitting packets to the relay device 20, a communication interface 15 for carrying out communications with the relay device 20, a packet reception unit 16 for receiving packets from the relay device 20, a report classifying unit 17 for extracting the RTCP report from the packets received by the packet reception unit 16, a report storing unit 18 for storing the RTCP report extracted by the report classifying unit 17, and a QoS (Quality of Service) control unit 19 for controlling qualities of the communications such as a transmission rate according to the RTCP report from the receiving terminal device 50. Note that each one of the data packet generation unit 13, the report classifying unit 17, and the QoS control unit 19 can be realized in a form of hardware or software.

The relay device 20 is connected with the transmitting terminal device 10 and the packet analysis device 30 through wired channels, and has communication interfaces (not shown) for carrying out communications with the transmitting terminal device 10 and the packet analysis device 30, and a route control unit (not shown) for controlling relay routes.

The packet analysis device 30 has a communication interface 31 for carrying out communications with the relay device 20, a packet reception unit 32 for receiving packets from the relay device 20, a data packet extraction unit 33 for extracting data packets from packets received by the packet reception unit 32, a packet transmission unit 34 for transmitting packets to the base station 40, a communication interface 35 for carrying out communications with the base station 40, a statistical information calculation unit 36 for analyzing a transmission state of the data packets extracted by the data packet extraction unit 33, a report generation unit 37 for generating the RTCP report according to the transmission state of the data packets, a packet reception unit 38 for receiving packets from the base station 40, and a packet transmission unit 39 for transmitting packets to the relay device 20. Note that each one of the data packet extraction unit 33, the statistical information calculation unit 36, and the report generation unit 37 can be realized in a form of hardware or software.

The base station 40 is connected with the packet analysis device 30 through a wired channel and with the receiving terminal device 50 through a radio channel. For this reason, the base station 40 has a communication interface (not shown) for carrying out communications with the packet analysis device 30 through the wired channel, a communication interface (not shown) for carrying out communications with the receiving terminal device 50 through the radio channel, and a route selection control unit (not shown) for selecting a relay route.

The receiving terminal device 50 is an information processing device such as portable telephone, PC, or PDA (Personal Digital Assistant) equipped with CPU, memory, etc., for example.

This receiving terminal device 50 has a communication interface 51 for carrying out communications with the base station 40, a packet reception unit 52 for receiving packets from the base station 40, a data packet extraction unit 53 for extracting data packets from packets received by the packet reception unit 52, a presentation unit 54 for making audio or video presentation of according to the audio data or video data contained in the data packets extracted by the data packet extraction unit 53, a statistical information calculation unit 55 for analyzing a transmission state of the data packets extracted by the data packet extraction unit 53, a report generation unit 56 for generating the RTCP report according to the transmission state of the data packets, and a packet transmission unit 57 for transmitting packets to the base station 40. Note that each one of the data packet extraction unit 53, the statistical information calculation unit 55, and the report generation unit 56 can be realized in a form of hardware or software.

In the following the operation of the communication system in the above described configuration will be described.

The data packet generation unit 13 of the transmitting terminal device 10 generates the data packets for the video signal data from the camera 11 or the video data, audio data, etc., that are stored in the hard disk drive (HDD) device 12 at a prescribed transmission rate that is set up by the control from the QoS control unit 19.

This data packet generation unit 13 generates the data packets according to the RTP packet format as specified by the RTP (Real-time Transport Protocol) defined by the RFC 1889, for example.

This RTP packet comprises an RTP header containing an identification information of the transmitting terminal device 10 and the receiving terminal device 50, and a payload containing data such as audio data, video data, etc.

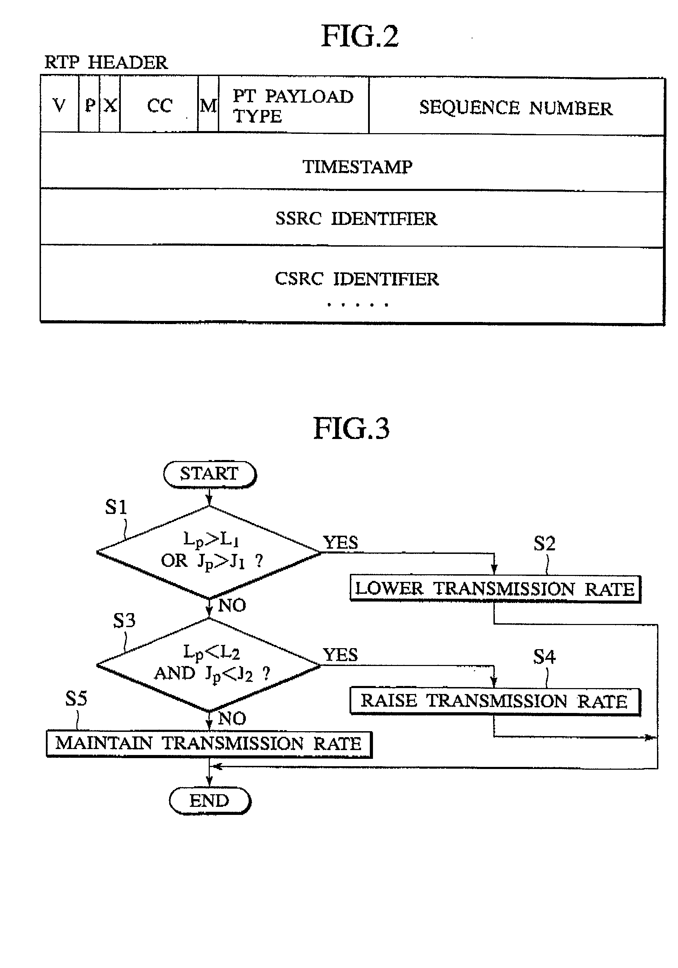

As shown in Fig. 2, the RTP header contains a version (V), a padding (P), an extension (X), a CSRC (Contributing Source) count (CC), a marker (M), a payload type (PT) for indicating a type of data in the payload (for distinguishing audio data and video data, for example), a sequence number, a timestamp, an SSRC (Synchronization Source) identifier for identifying a device to be used as a reference in the synchronized transmission, and a CSRC (Contributing Source) identifier for identifying a related device.

The packet transmission unit 14 constructs a UDP (User Datagram Protocol) packet by attaching a UDP header containing transmitting side and receiving side port numbers, to the RTP packet generated according to such a format. The packet transmission unit 14 constructs an IP packet by attaching an IP header containing IF addresses of the transmitting side device (the transmitting terminal device 10) and a receiving side device (the receiving terminal device 50), to the UDP packet so constructed, and supplies it to the communication interface 15.

The communication interface 15 transmits the constructed IP packet to the relay device 20 through the communication channel. The transmitted IP packet is then supplied to the communication interface 51 of the receiving terminal device 50 through the relay device 20, the packet analysis device 30 and the base station 40 according to the destination address.

When the IP packet is supplied to the communication interface 51, the packet reception unit 52 extracts the UDP packet from the 1P packet, extracts the RTP packet according to the port numbers contained in the UDP header of the UDP packet and supplies it to the data packet extraction unit 53.

The data packet extraction unit 53 reproduces the audio data, video data, etc., according to the payload type (PT) contained in the RTP header, for example, and supplies them into the presentation unit 54 and the statistical information calculation unit 55. The presentation unit 54 reproduces the audio sounds when data supplied from the data packet extraction unit 53 is the audio data, or reproduces the video images when data supplied from the data packet extraction unit 53 is the video data.

On the other hand, the statistical information calculation unit 55 calculates the number of packets, the number of lost packets, the delay, the delay jitter, etc., of the supplied RTP packets. The number of lost packets and the delay Jitter can be obtained from the sequence numbers and the timestamps contained in the RTP headers. Also, the statistical information calculation unit 55 obtains the packet loss rate indicating a rate of the lost packets from the number of lost packets within a prescribed period of time, for example.

The report generation unit 56 generates the RTCP report indicating the transmission state of the RTP packets according to the calculation result obtained by the statistical information calculation unit 55 and supplies it to the packet transmission unit 57, at a prescribed interval. The RTCP report contains at least the packet loss rate and the delay jitter, along with the sequence number, the timestamp, etc., of the most recently received RTP packet. Also, this RTCP report is generated as the RTP packet described above, and the packet transmission unit 57 constructs the IP packet by attaching a UDP header, an IP header, etc., to this RTP packet and transmits it to the transmitting terminal device 10 through the communication interface 51.

This IP packet is supplied to the communication interface 15 of the transmitting terminal device 10 through the base station 40, the packet analysis device 30 and the relay device 20. When this IP packet is supplied to the communication interface 15, the packet reception unit 16 extracts the UDP packet from the received IP packet, extracts the RTCP report from the UDP packet and supplies it to the report classifying unit 17.

The report classifying unit 17 stores the supplied RTCP report into a prescribed region (a region 18a for storing the RTCP report from the receiving terminal device 50 in this case) of the report storing unit 18. The source of the RTCP report can be Judged according to the IP address or the port number of the source described in the IP packet that contained the RTCP report, or the SSRC identifier described in the RTP header of the RTCP report, etc.

Also, the RTCP report contains parameters such as the packet loss rate, the delay jitter, etc., as described above, so that the report classifying unit 17 classifies the RTCP report according to these parameters and stores it into the region 18a of the report storing unit 18.

Also, a value of the parameter of each RTCP report to be stored in the report storing unit 18 can be a value given in the RTCP report supplied from the report classifying unit 17, or a weighted average value of the already stored parameter value and the new parameter value. For example, when a value of the parameter such as the packet loss rate that is already stored in each region of the report storing unit 18 is X, and the packet loss rate described in the RTCP report newly supplied from the report classifying unit 17 is Y, the weighted average value Z can be obtained as Z = (1-a)X + αY, where α is a value in a range of 0 to 1, which is determined according to a frequency by which the RTCP report is supplied, a manner by which the state of the transmission path varies, etc.

Note that, in this communication system, in addition to the receiving terminal device 50, the packet analysis device 30 is also transmitting the transmission state of the received RTP packets as the RTCP report to the transmitting terminal device 10.

More specifically, at the packet analysis device 30, when the IP packet is supplied to the communication interface 31, the packet reception unit 32 supplies this IP packet to the data packet extraction unit 33, When the IP packet is supplied, the data packet extraction unit 33 Judges whether the supplied packet is one for which there is a need to obtain the statistical information at the statistical information calculation unit 36 or not. This judgement can be made, for example, according to the IP address and the protocol number described in the IP packet, the destination port number described in the UDP packet extracted from the IP packet, the payload type and the SSRC identifier described in the RTP header, etc. For instance, when it is destined to the IF address of the receiving terminal device 50 and it has the port number that is used for the transmission of the RTP packets, it can be Judged as the IP packet for which there is a need to obtain the statistical information.

The data packet extraction unit 33 supplies the IP packet for which there is no need to obtain the statistical information as it is to the packet transmission unit 34, or supplies the IP packet for which there is a need to obtain the statistical information to the packet transmission unit 34 as well as to the statistical information calculation unit 36. When the IP packet is supplied, the statistical information calculation unit 36 calculates the number of packets, the number of lost packets, the delay, the delay Jitter, etc., of the supplied RTP packets.

The report generation unit 37 generates the RTCP report indicating the transmission state of the RTP packets according to the calculation result obtained by the statistical information calculation unit 36 and supplies it to the packet transmission unit 39, at a prescribed interval. The packet transmission unit 39 constructs the IP packet by attaching a UDP header, an IP header, etc., to the supplied RTP report and transmits it to the transmitting terminal device 10 through the communication interface 31. Note that, when the IP packet received by the packet reception unit 38 is supplied, the packet transmission unit 39 transmits this IP packet as it is to the relay device 20.

The IP packet transmitted by the packet transmission unit 39 is supplied to the communication interface 15 of the transmitting terminal device 10 through the relay device 20. When the IP packet is supplied to the communication interface 15, the packet reception unit 16 extracts the UDP packet from the received IP packet, extracts the RTCP report from the UDP packet and supplies it to the report classifying unit 17.

The report classifying unit 17 stores the supplied RTCP report into a prescribed region (a region 18b for storing the RTCP report from the packet analysis device 30 in this case) of the report storing unit 18. More specifically, the report classifying unit 17 classifies the RTCP report according to the parameters such as the packet loss rate, the delay Jitter, etc., and stores it into the region 18b of the report storing unit 18.

The QoS control unit 19 controls the qualities of the data packets generated by the data packet generation unit 13 according to the congestion state of the transmission path and the transmission state on bases of the RTCP reports stored in the regions 18a and 18b of the report storing unit 18. Here, the qualities include a transmission rate and an error tolerance of the data packets generated by the data packet generation unit 13, for example.

More specifically, the QoS control unit 19 analyzes the congestion state of the transmission path between the transmitting terminal device 10 and the packet analysis device 30 and the transmission state between the packet analysis device 30 and the receiving terminal device 50, for example, and controls the qualities such as the transmission rate and the error tolerance of the data packets appropriately according to the congestion state and the transmission state. The data packet generation unit 13 changes the qualities such as the transmission rate and the error tolerance of the data packets to be generated according to the control from the QoS control unit 19.

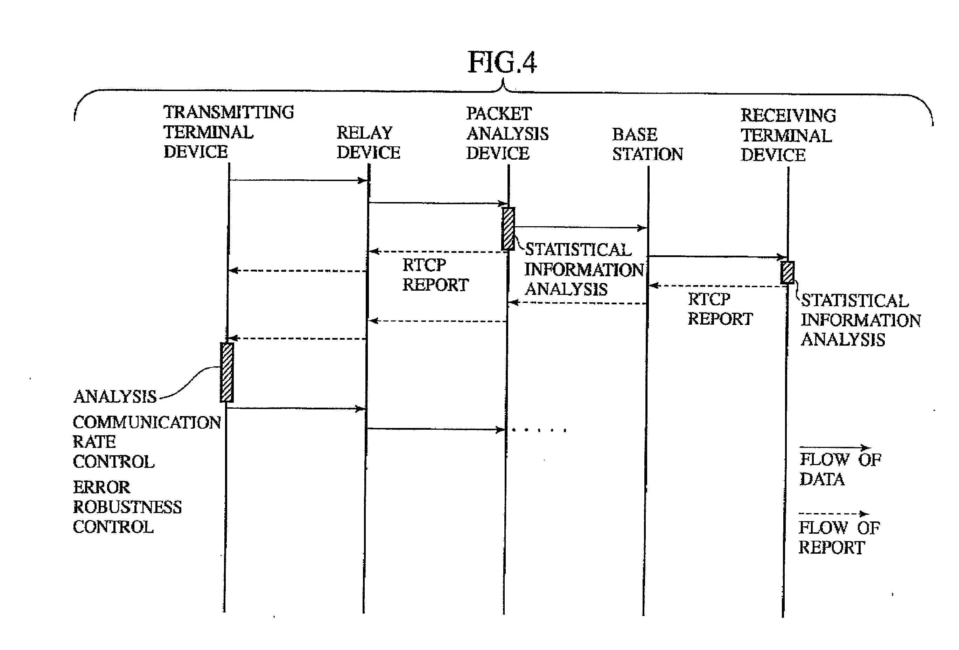

Fig. 4 schematically shows a flow of the RTP packets from the transmitting terminal device 10 to the receiving terminal device 50 and a flow of the RTCP report from the packet analysis device 30 and the receiving terminal device 50 to the transmitting terminal device 10 as described above,

The control of the transmission rate by the QoS control unit 19 is carried out by detecting the congestion state of the transmission path according to the RTCP report from the packet analysis device 30 stored in the region 18b and lowering the transmission rate when the transmission path is congested or raising the transmission rate when the transmission path is not congested.

Fig, 3 shows a processing procedure for such a control of the transmission rate of the data packets according to the congestion state. This processing is carried out starting from the step S1 of Fig. 3 whenever the data packet generation unit 13 generates one unit of the data packets, for example.

Here, the packet loss rate and the delay jitter at the packet analysis device 30 are denoted as Lp and Jp, respectively, the packet loss rate parameters are denoted as L1 and L2, while the delay jitter parameters are denoted as J1 and J2. The values of these parameters can be set as L1 = 5 %, L2 = 1 %, J1 = 50 ms and J2 = 20 ms, for example.

First, at the step S1, the QoS control unit 19 judges whether the packet loss rate Lp is greater than L1 or not, or whether the delay jitter Jp is greater than J1 or not, When either the packet loss rate Lp or the delay jitter Jp is greater than the respective one of L1 and J1, it can be regarded that the transmission path (wired channel) between the transmitting terminal device 10 and the packet analysis device 30 is congested, so that the QoS control unit 19 commands the lowering of the transmission rate of the data packets to the data packet generation unit 13 at the step S2, and the processing for this time is terminated.

More specifically, the QoS control unit 19 commands to lower a sampling rate or reduce the number of sample bits in the case of the audio data. Also, the QoS control unit 19 commands to reduce the number of frames per unit time or lower a spatial resolution in the case of the video data. Else, a plurality of files using a plurality of coding rates are provided in advance for one data and the QoS control unit 19 selects the file with the lower coding rate.

On the other hand, when both the packet loss rate Lp and the delay jitter Jp are not greater than L1 and J1 respectively, the processing proceeds from the step S1 to the step S3, where the QoS control unit 19 judges whether the packet loss rate Lp is less than L2 or not and whether the delay jitter Jp is less than J2 or not. When both the packet loss rate Lp and the delay jitter Jp are less than L2 and J2 respectively, it can be regarded that the transmission path between the transmitting terminal device 10 and the packet analysis device 30 is vacant, so that the QoS control unit 19 commands to raise the transmission rate of the data packets to the data packet generation unit 13 at the step S4, and the processing for this time is terminated.

More specifically, the QoS control unit 19 commands to raise a sampling rate or increase the number of sample bits in the case of the audio data. Also, the QoS control unit 19 commands to increase the number of frames per unit time or raise a spatial resolution, or select the file with the higher coding rate in the case of the video data.

On the other hand, when at least one of the packet loss rate Lp and the delay jitter Jp is not less than the respective one of L2 and J2, the processing proceeds from the step S3 to the step S5, where the QoS control unit 19 commands to maintain the current transmission rate of the data packets to the data packet generation unit 13, and the processing for this time is terminated.

By the above processing, the optimal control of the transmission rate according to the congestion state of the transmission path is carried out in this communication system. For this reason, it is possible to eliminate the unnecessary lowering of the qualities of the data packets, and it is also possible to relax the congestion of the network.

In the conventional communication system, the congestion state of the transmission path has been analyzed by using the packet loss rate, the delay jitter, etc., contained in the RTCP report from the receiving terminal device, for example. Consequently, when the channel with a poor transmission state such as a radio channel is involved in the transmission path, the transmission path can be judged as congested even in the case of the packet loss and the delay jitter that are caused by the transmission state. As a result, there have been cases where the transmission rate at the transmitting side is lowered more than necessary.

In contrast, in the communication system of this embodiment, the congestion state of the transmission path is analyzed by using the packet loss rate, the delay jitter, etc., contained in the RTCP report from the packet analysis device 30 where no radio channel with a poor transmission state is involved between the packet analysis device 30 and the transmitting terminal device 10, so that it is possible to comprehend the actual congestion state of the transmission path. For this reason, it is possible to prevent the lowering of the transmission rate more than necessary.

Also, the control of the error tolerance by the QoS control unit 19 is carried out by detecting the transmission state of the transmission path between the packet analysis device 30 and the receiving terminal device 50 according to the RTCP report from the packet analysis device 30 and the RTCP report from the receiving terminal device 50, and raising the error tolerance when the transmission state is poor and there are many errors or lowering the error tolerance when the transmission state is good and there are only few errors.

The transmission path between the packet analysis device 30 and the receiving terminal device 50 is formed by the wired channel from the packet analysis device 30 to the base station 40 and the radio channel from the base station 40 to the receiving terminal device 50. In general, the transmission state is expected to be poorer in the radio channel, so that it is expected that the transmission state between the packet analysis device 30 and the receiving terminal device 50 is largely influenced by the radio channel between the base station 40 and the receiving terminal device 50.

Consequently, when the packet loss rate at the receiving terminal device 50 is Lr, the packet loss rate due to the radio channel can be estimated as a difference (Lr-Lp) between the packet loss rate Lr at the receiving terminal device 50 and the packet loss rate Lp at the packet analysis device 30, with a negligible error.

For this reason, in this communication system, this difference (Lr-Lp) is set as the estimated packet loss rate (Lr-Lp) at the radio channel, and the error tolerance of the data packets generated by the data packet generation unit 13 is changed according to this estimated packet loss rate. More specifically, in the case where the video data is encoded by the so called MPEG at the data packet generation unit 13, for example, the transmission frequencies of I-picture, VOP (Video Object Plane) header, HEC (Header Extension Code), etc., are changed according to the estimated packet loss rate. For instance, as shown in Fig. 5, the transmission frequency of the I-picture is increased as the estimated packet loss rate becomes higher. In this way, it is possible to improve the error tolerance in the case of losing some I-pictures due to the packet loss.

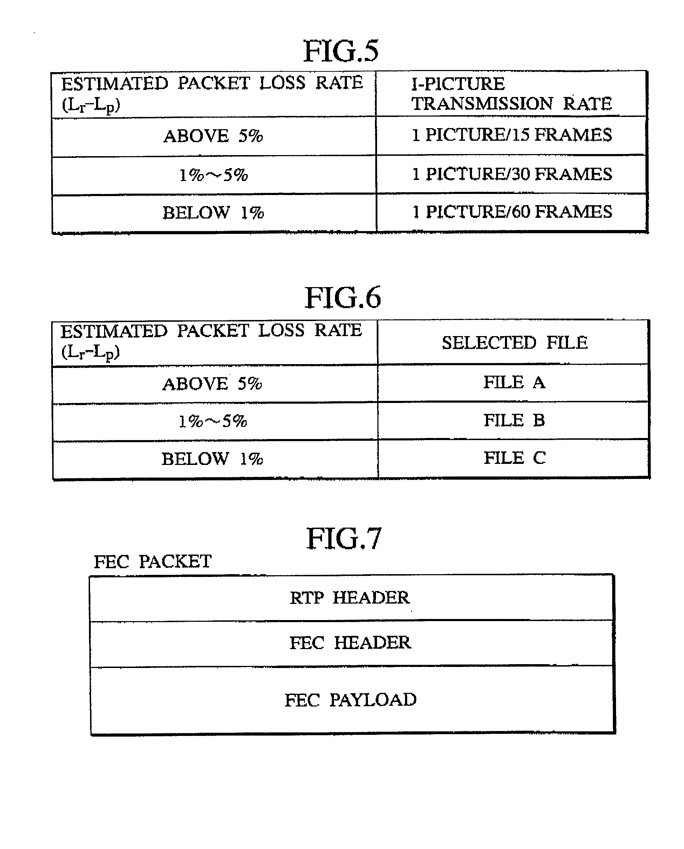

Alternatively, a plurality of files with different error tolerances can be provided in advance, and as shown in Fig. 6, the file with the higher error tolerance can be selected as the estimated packet loss rate becomes higher, for example. Note that, in Fig. 6, it is assumed that the error tolerance becomes higher in the order of the file A, the file B and the file C. In this way, it is possible to select the file with the appropriate error tolerance according to the packet loss rate.

Alternatively, the FEC (Forward Error Correction) packet specified by the RFC 2733 as a data packet as shown in Fig. 7, for example, can be transmitted at a prescribed frequency, and the transmission frequency of the FEC packet can be increased as the estimated packet loss rate becomes higher. In this way, it is possible to transmit the data packet with the appropriate error tolerance according to the estimated packet loss rate.

As described, by estimating the packet loss rate of the radio channel between the base station 40 and the receiving terminal device 50, i.e., a channel that is expected to have the poorest transmission state between the transmission terminal device 10 and the receiving terminal device 50, and changing the error tolerance of the data packets according to the estimated packet loss rate, it is possible to reduce the degradation of the data packets due to the packet loss and it is also possible to minimize the overhead due to the error tolerance.

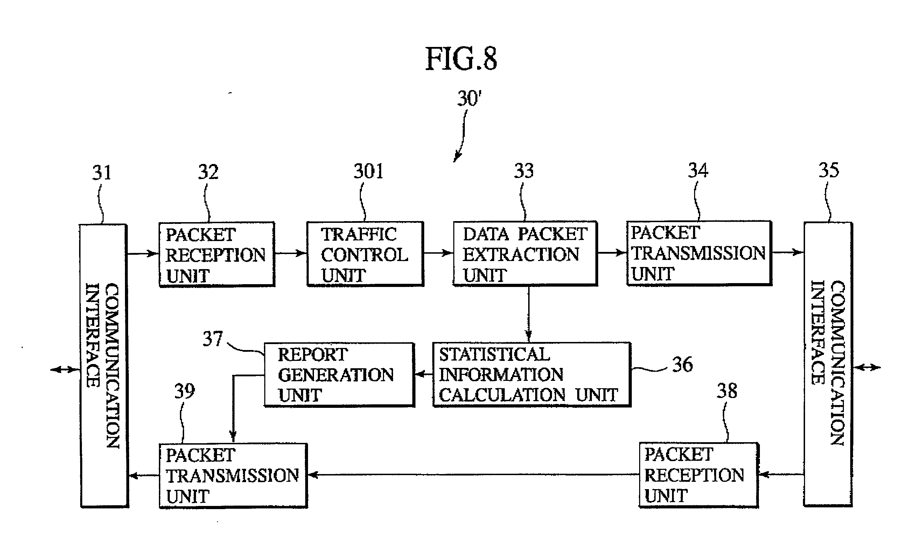

In the packet analysis device 30 shown in Fig. 1 described above, the packets received by the packet reception unit 32 are directly supplied to the data packet extraction unit 33, but as shown in Fig. 8, for example, it is also possible to provide a traffic control unit 301 for controlling the traffic of the packets received by the packet reception unit 32.

This traffic control unit 301 functions as a buffer for carrying out a conversion of the transmission rate of the packets from the transmitting terminal device 10 and the transmission rate of the packets with respect to the receiving terminal device 50. Namely, the transmission rate of the input packets with respect to the traffic control unit 301 is set to coincide with the transmission rate of the transmitting terminal device 10, and the transmission rate of the output packets from the traffic control unit 301 is set to coincide with the transmission rate with respect to the receiving terminal device 50 or the transmission rate with respect to the base station 40.

Even in the case of providing the traffic control unit 301 that functions as a buffer as described above, the packet analysis device 30 can carry out the analysis of the congestion state of the transmission path from the transmitting terminal device 10 to the packet analysis device 30 similarly as described above, for the purpose of transmitting the RTCP report to the transmitting terminal device 10 similarly as described above. In addition, by providing the traffic control unit 301, the transmission rate of the data packets to be supplied to the base station 40 can be set to be a transmission rate according to the transmission rate (error quality) of the radio channel, so that the congestion in the radio channel can be suppressed.

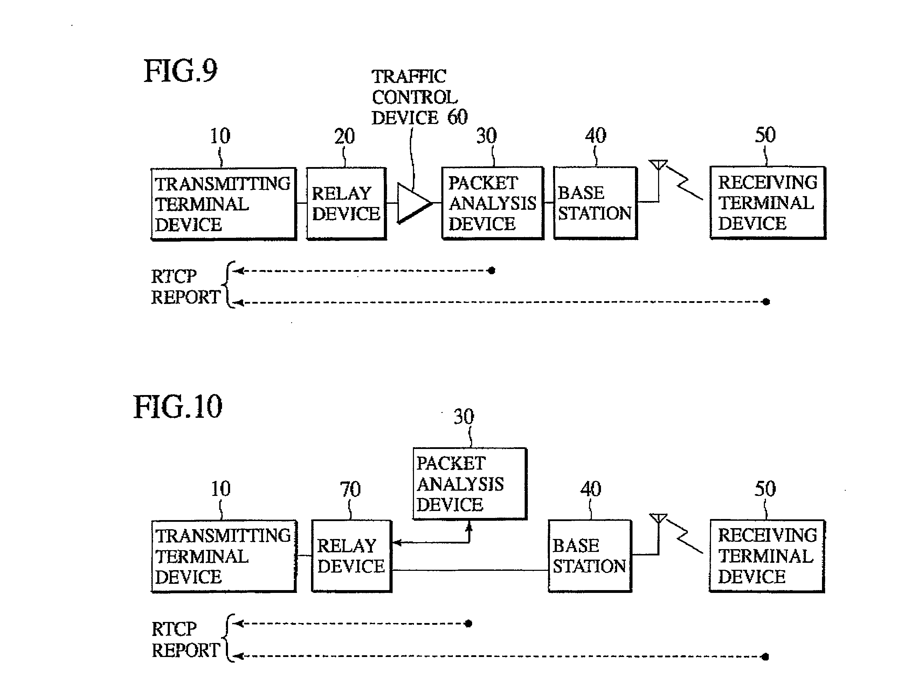

Alternatively, as shown in Fig. 9, for example, it is also possible to provide a traffic control device 60 for controlling the traffic between the relay device 20 and the packet analysis device 30

This traffic control device 60 also functions as a buffer for carrying out a conversion of the transmission rate of the packets from the transmitting terminal device 10 and the transmission rate of the packets with respect to the receiving terminal device 50, similarly as the traffic control unit 301 described above.

In this case, the transmission rate of the data packets supplied to the packet analysis device 30 is set to coincide with the transmission rate with respect to the receiving terminal device 50 or the transmission rate with respect to the base station 40. The packet analysis device 30 generates the RTCP report described above for the data packets that are supplied at this transmission rate, and supplies the RTCP report to the transmitting terminal device 10.

By providing the traffic control device 60 between the relay device 20 and the packet analysis device 30 as described above, it is possible to carry out the analysis of the congestion state of the transmission path that accounts for the conversion of the transmission rates.

Note that the packet analysis device 30 may not be provided with a function for carrying out the relay of the data packets as described above, and it is possible to use a configuration in which the packet transmission unit 34, the communication interface 35 and the packet reception unit 38 are omitted, for example.

In the case of using such a configuration for the packet analysis device 30, there is a need to provide a relay device 70 for supplying the data packets from the transmitting terminal device 10 to both the base station 40 and the packet analysis device 30, as shown in Fig. 10, for example.

However, the packet analysis device 30 in this case can also be realized by the receiving terminal device having functions for receiving the multicast packets and transmitting the RTCP report for the received packets, which is provided adjacent to the relay device 70, for example,

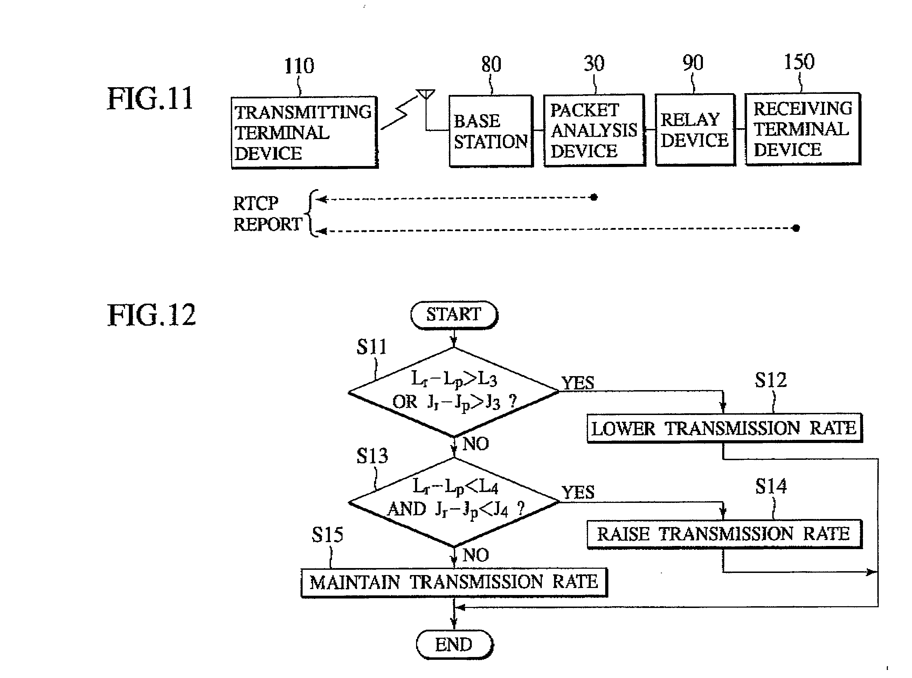

Also, the communication system shown in Fig. 1 has a configuration in which the radio channel exists on the receiving terminal device 50 side, but as shown in Fig. 11, for example, it is also possible to use a configuration in which the radio channel exists on a transmitting terminal device 110 side.

In this case, the transmitting terminal device 110 has the camera 11 to the packet transmission unit 14 and the packet reception unit 16 to the QoS control unit 19 similarly as the transmitting terminal device 10 described above, as well as a function for carrying out communications with a base station 80 through the radio channel instead of the communication interface 15. Also, a receiving terminal device 150 has the packet reception unit 52 to the packet transmission unit 57 similarly as the receiving terminal device 50 described above, as well as a function for carrying out communications with a relay device 90 through the wired channel instead of the communication interface 51.

Even in the case of using such a configuration, the packet analysis device 30 and the receiving terminal device 150 transmit the RTCP reports to the transmitting terminal device 110 according to the transmission states of the received RTP packets similarly as described above, and the RTCP report from the packet analysis device 30 is stored into the region 18b while the RTCP report from the receiving terminal device 150 is stored into the region 18a.

The QoS control unit 19 estimates the transmission state (error quality) of the radio channel between the transmitting terminal device 110 and the base station 80 according to the RTCP report from the packet analysis device 30 that is stored in the region 18b. The QoS control unit 19 also estimates the congestion state of the wired channel between the packet analysis device 30 and the receiving terminal device 150 according to the RTCP report from the receiving terminal device 150 that is stored in the region 18a and the RTCP report from the packet analysis device 30 that is stored in the region 18b. In addition, the QoS control unit 19 changes the transmission rate and the error tolerance of the data packets to be generated by the data packet generation unit 13 according to the transmission state and the congestion state.

Fig. 12 shows a processing procedure for the control of the transmission rate of the data packets in this communication system. This processing is carried out starting from the step S11 of Fig. 12 whenever the data packet generation unit 13 generates one unit of the data packets, for example.

Here, the packet loss rate and the delay jitter at the packet analysis device 30 are denoted as Lp and Jp, respectively, the packet loss rate and the delay jitter at the receiving terminal device 150 are denoted as Lr and Jr, respectively, the packet loss rate parameters are denoted as L3 and L4, while the delay jitter parameters are denoted as J3 and J4. The values of these parameters can be set as L3 = 5 %, L4 = 1 %, J3 = 50 ms and J4 = 10 ms, for example.

First, at the step S11, the QoS control unit 19 obtains a difference (Lr-Lp) between the packet loss rate Lr of the receiving terminal device 150 and the packet loss rate Lp of the packet analysis device 30, and a difference (Jr-Jp) between the delay jitter Jr of the receiving terminal device 150 and the delay jitter Jp of the packet analysis device 30, in order to analyze the congestion state of the wired channel between the packet analysis device 30 and the receiving terminal device 150.

Then, the QoS control unit 19 judges whether the difference (Lr-Lp) of the packet loss rates is greater than L3 or not and whether the difference (Jr-Jp) of the delay jitters is greater than J3 or not. When either the difference (Lr-Lp) of the packet loss rates or the difference (Jr-Jp) of the delay jitters is greater than the respective one of L3 and J3, it can be regarded that the transmission path (wired channel) between the packet analysis device 30 and the receiving terminal device 150 is congested, so that the QoS control unit 19 commands the lowering of the transmission rate of the data packets to the data packet generation unit 13 at the step S12, and the processing for this time is terminated.

On the other hand, when both the difference (Lr-Lp) of the packet loss rates and the difference (Jr-Jp) of the delay jitters are not greater than L3 and J3 respectively, the processing proceeds from the step S11 to the step S13, where the QoS control unit 19 judges whether the difference (Lr-Lp) of the packet loss rates is less than L4 or not and whether the difference (Jr-Jp) of the delay jitters is less than J4 or not. When both the difference (Lr-Lp) of the packet loss rates and the difference (Jr-Jp) of the delay jitters are less than L4 and J4 respectively, it can be regarded that the transmission path between the packet analysis device 30 and the receiving terminal device 150 is vacant, so that the QoS control unit 19 commands to raise the transmission rate of the data packets to the data packet generation unit 13 at the step S14, and the processing for this time is terminated.

On the other hand, when at least one of the difference (Lr-Lp) of the packet loss rates and the difference (Jr-Jp) of the delay jitters is not less than the respective one of L4 and J4, the processing proceeds from the step S13 to the step S15, where the QoS control unit 19 commands to maintain the current transmission rate of the data packets to the data packet generation unit 13, and the processing for this time is terminated.

By the above processing, the optimal control of the transmission rate according to the congestion state of the transmission path is carried out in this communication system, similarly as in the communication system of Fig. 1 described above.

Also, in addition to the control of the transmission rate described above, the QoS control unit 19 carries out the control of the error tolerance by estimating the transmission state (error quality) of the radio channel between the transmitting terminal device 110 and the base station 80 according to the packet loss rate Lp at the packet analysis unit 30, and raising the error tolerance of the data packets when the transmission state is poor and the packet loss rate Lp is high or lowering the error tolerance of the data packets when the transmission state is good and the packet loss rate Lp is low.

In this way, it is possible to reduce the degradation of the data packets due to the packet loss and it is also possible to minimize the overhead due to the error tolerance, similarly as in the communication system of Fig. 1 described above.

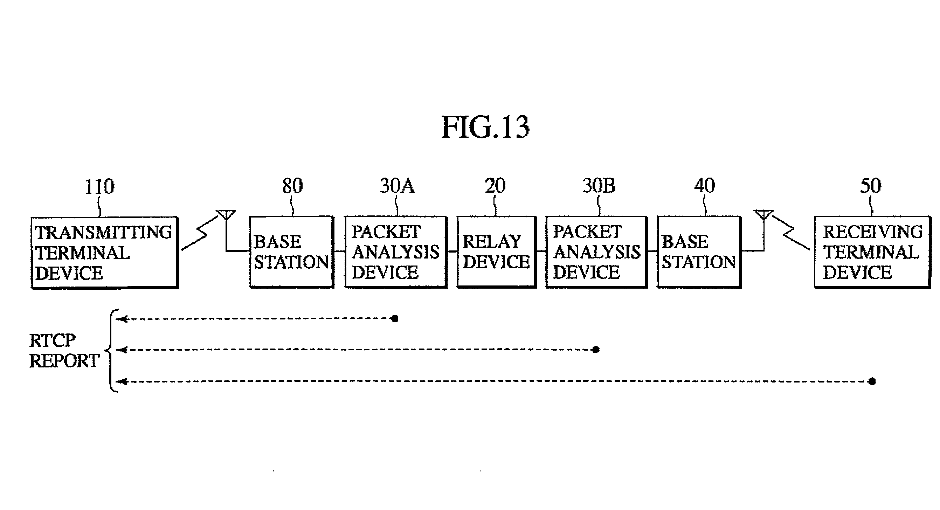

In the above description, the exemplary case of providing only one packet analysis device 30 has been described, but as shown in Fig. 13, it is also possible to provide a plurality of packet analysis devices 30A and 30B in the case where the transmission path involves a plurality of radio channels.

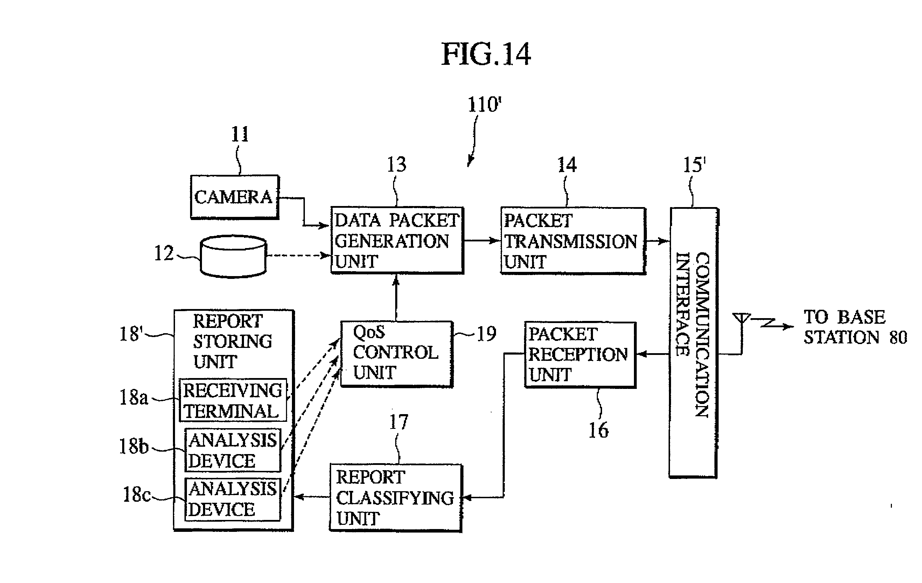

In the case of such a configuration, as shown in Fig. 14, for example, regions 18b and 18c for storing the RTCP reports from the packet analysis devices 30A and 30B respectively are provided in the report storing unit 18' of the transmitting terminal device 110'. Note that the number of the packet analysis devices is not limited to two as shown in Fig. 14, and can be any desired number as long as the corresponding number of regions are provided in the report storing unit 18'.

The report classifying unit 17 judges the source of the RTCP report according to the IP address or the port number of the source described in the IP packet that contained the RTCP report, or the SSRC identifier described in the RTP header of the RTCP report, etc., similarly as described above, and stores it into the corresponding region 18a, 18b, or 18c.

In the communication system in such a configuration, each one of the packet analysis devices 30A and 30B and the receiving terminal device 50 transmits the RTCP report to the transmitting terminal device 110', and the transmitting terminal device 110' controls the transmission rate and the error tolerance of the data packets according to each RTCP report.

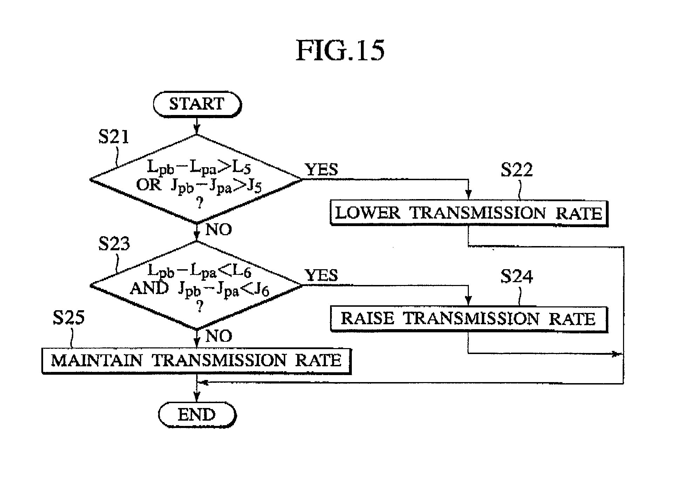

Fig. 15 shows a processing procedure for the control of the transmission rate of the data packets in this communication system. This processing is carried out starting from the step S21 of Fig. 15 whenever the data packet generation unit 13 generates one unit of the data packets, for example.

Here, the packet loss rate and the delay jitter at the packet analysis device 30A are denoted as Lpa and Jpa, respectively, the packet loss rate and the delay Jitter at the packet analysis device 30B are denoted as Lpb and Jpb, respectively, the packet loss rate and the delay jitter at the receiving terminal device 150 are denoted as Lr and Jr, respectively, the packet loss rate parameters are denoted as L5 and L6, while the delay Jitter parameters are denoted as J5 and J6. The values of these parameters can be set as L5 = 5 %, L6 = 1 %, J5 = 50 ms and J6 = 10 ms, for example.

First, at the step S21, the QoS control unit 19 obtains a difference (Lpb-Lpa) between the packet loss rate Lpb of the packet analysis device 30B and the packet loss rate Lpa of the packet analysis device 30A, and a difference (Jpb-Jpa) between the delay jitter Jpb of the packet analysis device 30B and the delay jitter Jpa of the packet analysis device 30A, in order to analyze the congestion state of the wired channel between the packet analysis device 30A and the packet analysis device 30B.

Then, the QoS control unit 19 judges whether the difference (Lpb-Lpa) of the packet loss rates is greater than L5 or not and whether the difference (Jpb-Jpa) of the delay jitters is greater than J5 or not. When either the difference (Lpb-Lpa) of the packet loss rates or the difference (Jpb-Jpa) of the delay jitters is greater than the respective one of L5 and J5, it can be regarded that the transmission path (wired channel) between the packet analysis device 30A and the packet analysis device 30B is congested, so that the QoS control unit 19 commands the lowering of the transmission rate of the data packets to the data packet generation unit 13 at the step S22, and the processing for this time is terminated.

On the other hand, when both the difference (Lpb-Lpa) of the packet loss rates and the difference (Jpb-Jpa) of the delay jitters are not greater than L5 and J5 respectively, the processing proceeds from the step S21 to the step S23, where the QoS control unit 19 judges whether the difference (Lpb-Lpa) of the packet loss rates is less than L6 or not and whether the difference (Jpb-Jpa) of tile delay jitters is less than J6 or not. When both the difference (Lpb-Lpa) of the packet loss rates and the difference (Jpb-Jpa) of the delay jitters are less than L6 and J6 respectively, it can be regarded that the transmission path between the packet analysis device 30A and the packet analysis device 30B is vacant, so that the QoS control unit 19 commands to raise the transmission rate of the data packets to the data packet generation unit 13 at the step S24, and the processing for this time is terminated.

On the other hand, when at least one of the difference (Lpb-Lpa) of the packet loss rates and the difference (Jpb-Jpa) of the delay jitters is not less than the respective one of L6 and J6, the processing proceeds from the step S23 to the step S25, where the QoS control unit 19 commands to maintain the current transmission rate of the data packets to the data packet generation unit 13, and the processing for this time is terminated.

By the above processing, the optimal control of the transmission rate according to the congestion state of the transmission path is carried out in this communication system, similarly as in the communication system of Fig. 1 or Fig. 11 described above.

Also, in addition to the control of the transmission rate described above, the QoS control unit 19 carries out the control of the error tolerance by estimating the transmission state (error quality) of the radio channels based on a total of the packet loss rates at the respective radio channels, and raising the error tolerance of the data packets when the transmission state is poor and the total packet loss rate is high or lowering the error tolerance of the data packets when the transmission state is good and the total packet loss rate is low.

More specifically, the QoS control unit 19 estimates the packet loss rate of the radio channel between the transmitting terminal device 110' and the base station 80 according to the packet loss rate Lpa at the packet analysis device 30A. and estimates the packet loss rate of the radio channel between the packet analysis device 30B and the receiving terminal device 50 according to the difference (Lr-Lpb) of the packet loss rate Lr at the receiving terminal device 50 and the packet loss rate Lpb at the packet analysis device 30B. Then, a sum (Lr+Lpa-Lpb) of the packet loss rates of these radio channels is set as the total packet loss rate at the radio channels, and the error tolerance of the data packets is changed according to this total packet loss rate.

In this way, it is possible to reduce the degradation of the data packets due to the packet loss and it is also possible to minimize the overhead due to the error tolerance, similarly as in the communication system of Fig. 1 or Fig. 11 described above,

Also, the above description is directed to the exemplary case of providing the relay device 20, the packet analysis device 30, the base station 40 and the traffic control device 60 as separate devices, but it is also possible to use a configuration in which a part or a whole of the functions of these devices are provided integrally in one or a plurality of devices.

Also, the above description is directed to the exemplary case where the QoS control unit 19 analyzes the state of the transmission path between the transmitting terminal device and the receiving terminal device according to the packet loss rate and the delay jitter described in the RTCP report, and controls the qualities of the data packets to be transmitted according to the analyzed state, However, it is also possible to analyze the state of the transmission path according to the other parameters described in the RTCP report such as the number of lost packets and the delay for the RTP packets, for example, and control the qualities of the data packets to be transmitted according to the analyzed state.

Also, the above description is directed to the exemplary case of controlling the transmission rate and the error tolerance of the data packets, but it is also possible to analyze the congestion state of the wired channel portion according to the packet loss rate at the packet analysis device or the packet loss rates at the packet analysis device and the receiving terminal device, and control only the transmission rate according to the analyzed congestion state.

AS described, according to the present invention, the congestion state of the transmission path is analyzed according to the transmission state of the media packets (RT packets) received by the relay device that relays the RT packets from the transmitting terminal device, and the transmission rate of the media packets (RT packets) to be transmitted by the transmitting terminal device is controlled according to the congestion state analysis result, so that it is possible to control the transmission rate of the media packets (RT packets) to be transmitted by the transmitting terminal device according to the congestion state of the transmission path that is analyzed according to the media packets (RT packets) received by the relay device.

For this reason, even in the case involving a transmission path with a poor transmission state such as a radio channel between the transmitting terminal device and the receiving terminal device, for example, it is possible to control the transmission rate of the media packets (RT packets) appropriately according to the actual congestion state of the transmission path, and thereby it is possible to prevent the lowering of the transmission rate more than necessary.

Also, according to the present invention, the congestion state of the transmission path between the transmitting terminal device and the receiving terminal device is analyzed, the transmission state of the media packets (RT packets) between the transmitting terminal device and the receiving terminal device is analyzed, and the qualities (the transmission rate, the error tolerance, etc., for example) of the media packets (RT packets) to be transmitted by the transmitting terminal device is controlled according to the transmission path congestion state analysis result and the transmission state analysis result, so that it is possible to control the qualities of the media packets (RT packets) according to the state of the transmission path.

For this reason, even in the case involving a transmission path with a poor transmission state such as a radio channel between the transmitting terminal device and the receiving terminal device, it is possible to control the qualities of the media packets (RT packets) to be transmitted appropriately according to the actual transmission state of the transmission path.

It is also to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A communication quality control method for controlling a transmission rate of media packets to be transmitted from a transmitting terminal device to a receiving terminal device, comprising the steps of:
analyzing a congestion state of a transmission path according to a transmission state of the media packets received by a relay device for relaying the media packets from the transmitting terminal device; and
controlling the transmission rate of the media packets to be transmitted by the transmitting terminal device according to the congestion state analyzed by the analyzing step.

2. A communication quality control method for controlling qualities of media packets to be transmitted from a transmitting terminal device to a receiving terminal device, comprising the steps of:
(a) analyzing a congestion state of a transmission path between the transmitting terminal device and the receiving terminal device;
(b) analyzing a transmission state of the media packets received by a relay device for relaying the media packets between the transmitting terminal device and the receiving terminal device; and
(c) controlling the qualities of the media packets to be transmitted by the transmitting terminal device according to the congestion state analyzed by the step (a) and the transmission state analyzed by the step (b).

3. The communication quality control method of claim 2, wherein the step (b) includes the steps of:
(b1) analyzing the transmission state of the media packets received by a relay device for relaying the media packets from the transmitting terminal device: and
(b2) analyzing the transmission state of the media packets received by the receiving terminal device through the relay device; and
the step (c) estimates the transmission state of the media packets between the transmitting terminal device and the receiving terminal device according to the transmission state analyzed by the step (b1) and the transmission state analyzed by the step (b2).

4. The communication quality control method of claim 3, further comprising the steps of:
transmitting a report of the transmission state analyzed by the step (b1) to the transmitting terminal device; and
transmitting a report of the transmission state analyzed by the step (b2) to the transmitting terminal device.

5. The communication quality control method of claim 2, wherein the step (b) analyzes the transmission state of the media packets at one transmission path for which the transmission state is poorer among a transmission path between the transmitting terminal device and a relay device for relaying the media packets from the transmitting terminal device and a transmission path between the relay device and the receiving terminal device.

6. The communication quality control method of claim 2, wherein the step (b) analyzes the transmission rates of the media packets by analyzing at least one of a number of lost packets, a packet loss rate, a delay, and a delay jitter.

7. The communication quality control method of claim 2, wherein the step (c) controls the qualities of the media packets including at least one of a transmission rate and an error tolerance of the media packets.

8. A method for operating a packet analysis device, comprising the steps of:
analyzing a transmission state of media packets received by a relay device for relaying communications between a transmitting terminal device for transmitting the media packets and a receiving terminal device for receiving the media packets from the transmitting terminal device; and
transmitting a report of the transmission state analyzed by the analyzing step, to the transmitting terminal device which controls qualities of the media packets to be transmitted according to the report.

9. A method for operating a transmitting terminal device, comprising the steps of:
transmitting media packets from the transmitting terminal device;
acquiring a relayed packet analysis report of a transmission state of the media packets received by a relay device for relaying the media packets from the transmitting terminal device, and a received packet analysis report of a transmission state of the media packets received by a receiving terminal device; and
controlling qualities of the media packets to be transmitted by the transmitting step according to the relayed packet analysis report and the received packet analysis report acquired by the acquiring step.

10. A communication quality control system for controlling a transmission rate of media packets to be transmitted from a transmitting terminal device to a receiving terminal device, comprising:
an analysis unit for analyzing a congestion state of a transmission path according to a transmission state of the media packets received by a relay device for relaying the media packets from the transmitting terminal device; and
a control unit for controlling the transmission rate of the media packets to be transmitted by the transmitting terminal device according to the congestion state analyzed by the analysis unit.

11. A communication quality control system for controlling qualities of media packets to be transmitted from a transmitting terminal device to a receiving terminal device, comprising:
a congestion state analysis unit for analyzing a congestion state of a transmission path between the transmitting terminal device and the receiving terminal device;
a transmission state analysis unit for analyzing a transmission state of the media packets received by a relay device for relaying the media packets between the transmitting terminal device and the receiving terminal device; and
a control unit for controlling the qualities of the media packets to be transmitted by the transmitting terminal device according to the congestion state analyzed by the congestion state analysis unit and the transmission state analyzed by the transmission state analysis unit.

12. The communication quality control system of claim 11, wherein the transmission state analysis unit includes:
a relayed packet analysis unit for analyzing the transmission state of the media packets received by a relay device for relaying the media packets from the transmitting terminal device; and
a received packet analysis unit for analyzing the transmission state of the media packets received by the receiving terminal device through the relay device; and
the control unit estimates the transmission state of the media packets between the transmitting terminal device and the receiving terminal device according to the transmission state analyzed by the relayed packet analysis unit and the transmission state analyzed by the received packet analysis unit.

13. The communication quality control system of claim 12, further comprising:
a relayed packet analysis report transmission unit for transmitting a report of the transmission state analyzed by the relayed packet analysis unit in the relay device to the control unit in the transmitting terminal device; and
a received packet report transmission unit for transmitting a report of the transmission state analyzed by the received packet analysis unit in the receiving terminal device to the control unit in the transmitting terminal device.

14. The communication quality control system of claim 11, wherein the transmission state analysis unit analyzes the transmission state of the media packets at one transmission path for which the transmission state is poorer among a transmission path between the transmitting terminal device and a relay device for relaying the media packets from the transmitting terminal device and a transmission path between the relay device and the receiving terminal device.

15. The communication quality control system of claim 11, wherein the transmission state analysis unit analyzes the transmission rates of the media packets by analyzing at least one of a number of lost packets, a packet loss rate, a delay, and a delay jitter.

16. The communication quality control system of claim 11, wherein the control unit controls the qualities of the media packets including at least one of a transmission rate and an error tolerance of the media packets.

17. A packet analysis device, comprising:
an analysis unit for analyzing a transmission state of media packets received by a relay device for relaying communications between a transmitting terminal device for transmitting the media packets and a receiving terminal device for receiving the media packets from the transmitting terminal device; and
a report transmission unit for transmitting a report of the transmission state analyzed by the analysis unit, to the transmitting terminal device which controls qualities of the media packets to be transmitted according to the report.

18. A transmitting terminal device, comprising:
a media packet transmission unit for transmitting media packets;
an analysis report acquisition unit for acquiring a relayed packet analysis report of a transmission state of the media packets received by a relay device for relaying the media packets from the transmitting terminal device, and a received packet analysis report of a transmission state of the media packets received by a receiving terminal device: and
a control unit for controlling qualities of the media packets to be transmitted by the media packet transmission unit according to the relayed packet analysis report and the received packet analysis report acquired by the analysis report acquisition unit.
